# EUROPÄISCHE PATENTANMELDUNG

(11) **EP 2 070 640 A2**
(43) Veröffentlichungstag der Anmeldung: **17.06.2009**
(21) Anmeldenummer: 08021419.0
(22) Anmeldetag: 10.12.2008
(51) Int. Cl.: B23K 37/04, B23P 19/00, B23Q 7/14, B65D 19/44

(54) **Leichtbaugrundplatte eines Werkstückträgers**

(30) Priorität: 12.12.2007 DE 102007060360
(71) Anmelder: ThyssenKrupp Drauz Nothelfer GmbH, 74076 Heilbronn (DE)
(72) Erfinder: Stein, Hans, Dipl.-Ing., 09337 Hohenstein-Ernstthal OT Wüstenbrand (DE); Seidel, Wilfried, Dipl.-Ing., 09119 Chemnitz (DE); Hufenbach, Werner, Prof. Dr.-Ing. Habil, 01324 Dresden (DE); Adam, Frank, Dr.-Ing., 01277 Dresden (DE); Renner, Ole, Dipl.-Ing., 01099 Dresden (DE); Effmert, Stefan, Dipl.-Ing., 01796 Pirna (DE)
(74) Vertreter: Adams, Steffen

(57) **Zusammenfassung**

Die Erfindung betrifft eine Leichtbaugrundplatte, insbesondere zum Fügen und/oder Bearbeiten von Bauteilen, insbesondere Fahrzeugteilen oder anderen Teilen, unter Verwendung von Adapterelementen zur Befestigung von Komponenten an der Leichtbaugrundplatte. Um eine Leichtbaugrundplatte zur Verfügung zu stellen, die insbesondere zum Fügen und/oder Bearbeiten von Fahrzeugteilen geeignet ist und es gestattet, Komponenten über Adapterelemente (4) an der Leichtbaugrundplatte zu befestigen, wird erfindungsgemäß vorgeschlagen, dass die Leichtbaugrundplatte (P) aus einem ersten plattenförmigen Element (1) und einem zweiten plattenförmigen Element (2) gebildet wird, die durch Abstandselemente (3) miteinander verbunden sind, wobei die Adapterelemente (4) und die Abstandselemente (3) miteinander gekoppelt sind.

## Beschreibung

Die Erfindung betrifft eine Leichtbaugrundplatte, insbesondere zum Fügen und/oder Bearbeiten von insbesondere Fahrzeugteilen oder anderen Teilen, unter Verwendung von Adapterelementen zur Befestigung von Komponenten an der Leichtbaugrundplatte.
Aus DD 262 638 A1 ist eine Palette für Transport, Lagerung und Bearbeitung von prismatischen Teilen bekannt, die aus kastenförmigen Hohlprofilen gebildet wird, deren Ober- und Unterseite durch planparallele Platten begrenzt wird. Die Oberseite dient als Werkstückträgerplatte und enthält Nuten und/oder Bohrungen zur Aufnahme von Werkstückspannelementen. Die untere Platte enthält Einrichtungen zur Positionierung der Palette im Arbeitsraum. Die Hohlprofile erstrecken sich parallel zur Ausrichtung der Platten und sind mit TUL-Mitteln kompatibel.
Aus DE 101 00 914 A1 ist ein plattenförmiges Leichtbauteil auf Basis eines Kunststoff-Metall-Verbundes bekannt, das aus zwei sich gegenüberliegenden Metallplatten besteht, die über eine Stützstruktur aus thermoplastischem Kunststoff mittels Verankerungspunkten miteinander verbunden sind.
Die vorgenannten Lösungen sind nicht dazu geeignet, Komponenten zum Fügen und/oder Bearbeiten von Fahrzeugteilen flexibel zu adaptieren.

Aufgabe der Erfindung ist es, eine Leichtbaugrundplatte zu entwickeln, die insbesondere zum Fügen und/oder Bearbeiten von Fahrzeugteilen geeignet ist und es dazu gestattet, unter Verwendung von Adapterelementen, Komponenten an der Leichtbaugrundplatte zu befestigen.

Diese Aufgabe wird erfindungsgemäß mit den Merkmalen des ersten Patentanspruchs gelöst. Vorteilhafte Ausgestaltungen ergeben sich aus den Unteransprüchen.

Die erfindungsgemäße Leichtbaugrundplatte, die insbesondere zum Fügen und/oder Bearbeiten von Fahrzeugteilen oder anderen Bauteilen eingesetzt wird, weist Adapterelemente zur Befestigung von Komponenten an der Leichtbaugrundplatte auf, wobei die Leichtbaugrundplatte aus einem ersten plattenförmigen Element und einem zweiten plattenförmigen Element gebildet wird, die durch Abstandselemente miteinander verbunden sind, und die Adapterelemente und die Abstandselemente miteinander gekoppelt sind.
Dadurch wird eine leichte flexibel einsetzbare und an verschiedenste Anforderungen einfach anpassbare Leichtbaugrundplatte geschaffen. Dadurch, dass die Adapterelemente mit den Abstandselementen gekoppelt sind, wird bei einer hohen Stabilität (insbesondere Formstabilität) eine hohe Tragfähigkeit gewährleistet.

Dabei liegt jeweils ein Abstandselement an dem ersten plattenförmigen Element und an dem zweiten plattenförmigen Element an und ist mit diesem verbunden, wobei jeweils ein mit dem Abstandselement gekoppeltes Adapterelement an der Oberseite des zweiten plattenförmigen Elementes angeordnet ist.
Die Abstandselemente können massiv oder hohl oder auch napfförmig ausgebildet sein.

Bevorzugt weist ein hohles oder ein napfförmiges Abstandselement in Richtung zu wenigstens einem plattenförmigen Element einen nach außen weisenden Flansch auf.

Der Querschnitt des Abstandselementes kann in der Form eines Vielecks oder kreisförmig ausgebildet sein.

Das Abstandselement weist erste Befestigungspositionen in Richtung zum ersten plattenförmigen Element und zweite Befestigungspositionen in Richtung zum zweiten plattenförmigen Element auf, die bevorzugt bei einer hohlen Ausführung des Abstandselementes zueinander fluchtend angeordnet sind.

Zur Gewährleistung einer Kabel- bzw. Leitungsdurchführung können das erste und/oder zweite plattenförmige Element im Bereich der Befestigungspositionen eines Abstandselementes Ausnehmungen aufweisen.
Das Abstandselement liegt insbesondere bei einer hohlen Ausbildung am ersten plattenförmigen Element mittels eines ersten Befestigungsflansches und am zweiten plattenförmigen Element mittels eines zweiten Befestigungsflansches an. Die Befestigungsflansche können entweder außen oder innen am ersten bzw. zweiten plattenförmigen Element anliegen.

Ein napfförmiges Abstandselement wird bevorzugt mit dem Boden des Napfes innen am ersten plattenförmigen Element befestigt und liegt ebenfalls mit einem zweiten Flansch innen oder außen am zweiten plattenförmigen Element an.

Auf der dem ersten Befestigungsflansch gegenüberliegenden Seite des ersten plattenförmigen Elementes ist eine erste Platte angeordnet, mit welcher der erste Befestigungsflansch verbunden ist, so dass das erste plattenförmige Element zwischen erstem Befestigungsflansch und der ersten Platte sitzt.
Analog ist auch auf der dem zweiten Befestigungsflansch gegenüberliegenden Seite des zweiten plattenförmigen Elementes eine zweite Platte angeordnet, mit welcher der zweite Befestigungsflansch verbunden ist, so dass das zweite plattenförmige Element zwischen zweitem Befestigungsflansch und zweiter Platte sitzt.

Es ist möglich, dass entweder der außen am zweiten plattenförmigen Element anliegende zweite Befestigungsflansch oder die außen am zweiten plattenförmigen Element anliegende zweite Platte als Adapterelement ausgebildet sind oder ein Adapterelement tragen.
Bevorzugt sind mehrere miteinander gekoppelte Einheiten aus Adapterelement und Abstandselement rasterartig angeordnet.

Es ist möglich, dass ein hohles oder napfförmiges Abstandselement eine Wandung mit einem oder mehreren zur Kabel- und/oder Leitungsdurchführung geeigneten Durchbrüchen aufweist.

Vorteilhafterweise ist die Leichtbaugrundplatte mit wenigstens einem Handhabungsmodul versehen bzw. kombinierbar.

Dazu weist die Leichtbaugrundplatte einen Lagertopf auf, von dem das Handhabungsmodul aufnehmbar ist. Dazu weist der Lagertopf oder das Handhabungsmodul z.B. eine Kupplung für das Handhabungselement auf.

Der Lagertopf erstreckt sich ähnlich wie die Abstandselemente zwischen dem ersten und dem zweiten plattenförmigen Element und ist an den plattenförmigen Elementen befestigt.

Außen an dem zweiten plattenförmigen Element ist ein Adapterelement angeordnet, welches mit dem Lagertopf gekoppelt/verbunden ist.
Die Befestigung des Lagertopfes kann analog zur Befestigung von Abstandselement und Adapterelement am ersten und zweiten plattenförmigen Element erfolgen.

Zur Steifigkeitserhöhung der Leichtbaugrundplatte und/oder Dämpfung weist der sich zwischen ersten und zweiten plattenförmigen Element ersteckende Raum dafür geeignete Mittel auf. Z.B kann dieser Zwischenraum mit Strukturschaum (*Hartschaum*) ausgefüllt bzw. ausgeschäumt sein.

An die Außenseite (Unterseite) des ersten plattenförmigen Elementes kann sich ein abgeschlossener zur Kabel- und/oder Leitungsdurchführung und/oder - lagerung geeigneter Kabelraum anschließen.

Weiterhin ist es möglich, dass die Leichtbaugrundplatte zumindest teilweise von einem zur Kabel- und/oder Leitungsdurchführung und/oder -lagerung geeigneten Kabelkanal umrandet wird.

Die Leichtbaugrundplatte ist mittels des am Handhabungsmodul angreifbaren Handhabungselements in einem Speicher ablegbar und aus dem Speicher entnehmbar und in eine Arbeitsstation überführbar und umgekehrt.

Auf den Adapterelementen der Leichtbaugrundplatte sind Justierelemente und/oder Fixierelemente und/oder Spannelemente und/oder Handhabungselemente und/oder Sensoren und/oder Messmodule und/oder Bearbeitungsmodule adaptierbar.

Durch die konstruktive Ausführung der Leichtbaugrundplatte ist es auf einfache Art und Weise möglich, dass durch diese Stromkabel und/oder Datenübertragungskabel und/oder Sensorkabel und/oder hydraulische und/oder pneumatische Medienleitungen zu den auf den Adapterelementen angeordneten Elementen und/oder Modulen führen.

Weiterhin weist die Leichtbaugrundplatte eine kabellose Stromversorgung für die auf den Adapterelementen angeordneten Elemente und/oder Module auf. Die Stromversorgung kann beispielsweise über Funk realisiert werden, wozu in der Leichtbaugrundplatte eine entsprechende Empfangseinheit vorzusehen ist. Weiterhin ist es möglich, die kabellose Stromversorgung über eine Primärspule und eine Sekundärspule zu gewährleisten, wobei dann in der Leichtbaugrundplatte die Sekundärspule und z.B. in der Arbeitsstation die Primärspule angeordnet ist.

Weiterhin weist die Leichtbaugrundplatte vorteilhafterweise einen oder mehrere Sensoren zur Überwachung der element- und/oder modul- und/oder bauteilbezogenen Bestückung sowie einen oder mehrere Sensoren zur Überwachung der lagegerechten Ablage in dem Speicher und/oder in der Arbeitsstation auf.

Ebenfalls ist es möglich, die Leichtbaugrundplatte mit Mitteln zu bestücken, die deren Erkennung gewährleisten.

Das erste und/oder das zweite plattenförmige Element bestehen aus Stahl, Aluminium, Kunststoff, faserverstärktem Kunststoff oder einer Kombination dieser Materialien. Bevorzugt werden das erste und das zweite plattenförmige Element aus glasfaserverstärktem oder carbonfaserverstärktem Kunststoff hergestellt.

Ebenfalls können die Abstandselemente und/oder der Lagertopf und/oder die Adapterelemente und/oder die erste und/oder zweite Platte aus Stahl, Aluminium, Kunststoff, faserverstärktem Kunststoff oder einer Kombination dieser Materialien bestehen.
Bevorzugt bestehen die Abstandselemente, der Lagertopf, die Adapterelemente und die Platten aus Aluminium.

Der Kabelraum und die Kabelkanäle werden bevorzugt aus glasfaserverstärktem oder carbonfaserverstärktem Kunststoff gefertigt.

Die Abstandselemente und/oder deren Flansche und ggf. der Boden (bei napfförmigen Abstandselementen) und/oder die Platten und/oder die Adapterelemente werden mit den plattenförmigen Elementen und/oder untereinander mittels einer stoffschlüssigen Verbindung, bevorzugt einer Klebeverbindung, verbunden.

Zusätzlich oder alternativ kann eine Schraubverbindung oder eine Steckverbindung vorgesehen werden.

Um die aus glasfaserverstärktem oder carbonfaserverstärktem Kunststoff bestehenden Elemente der Leichtbaugrundplatte vor starker Hitzeeinwirkung zu schützen, ist es möglich, zumindest die außen liegenden Seiten des ersten und/oder zweiten plattenförmigen Elementes und/oder zumindest die außen liegenden Seiten des Kabelraums und/oder des Kabelkanals mit einer vor starker Hitzeeinwirkung schützenden Beschichtung zu versehen.
Dazu kann beispielsweise eine Metallfolie, insbesondere eine Aluminiumfolie aufkaschiert werden. Wird die Leichtbaugrundplatte für Schweißarbeiten eingesetzt, ist dadurch deren Oberfläche vor den beim Schweißen entstehenden Spritzern geschützt.

Mit der erfindungsgemäßen Lösung wird eine Leichtbaugrundplatte geschaffen, die einen leichten und robusten Aufbau aufweist und sehr flexibel einsetzbar ist, da sie schnell und effektiv mit den unterschiedlichsten Komponenten durch die Verwendung von Adapterelementen bestückt werden kann und somit zum Fügen und/oder Bearbeiten von insbesondere Fahrzeugteilen oder anderen Teilen besonders geeignet ist.

Die Erfindung wird nachfolgend anhand von Ausführungsbeispielen und zugehörigen Zeichnungen näher erläutert. Es zeigen:
- Fig. 1:: Draufsicht einer Leichtbaugrundplatte,
- Fig. 2:: Schnitt A-A gem. Fig. 1,
- Fig. 3:: Schnitt B-B gem. Fig. 1,
- Fig. 4:: dreidimensionale Darstellung einer Leichtbaugrundplatte gem. Fig. 1.
- Fig. 5:: alternative Befestigung eines Abstandselementes und eines Adapterelementes.

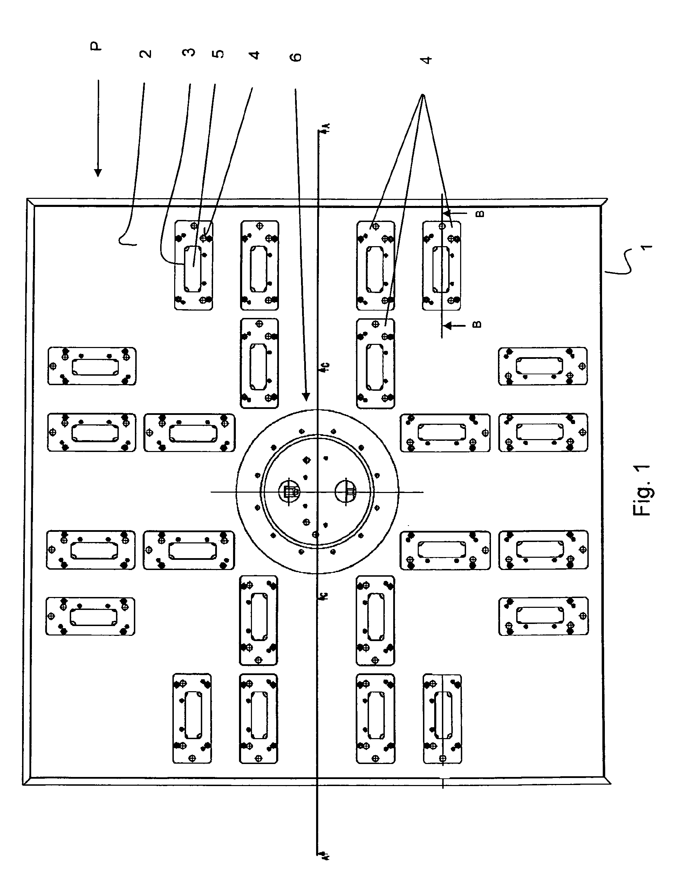

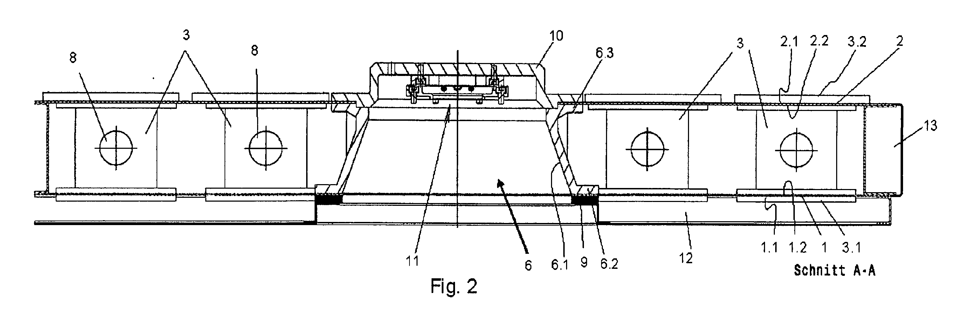

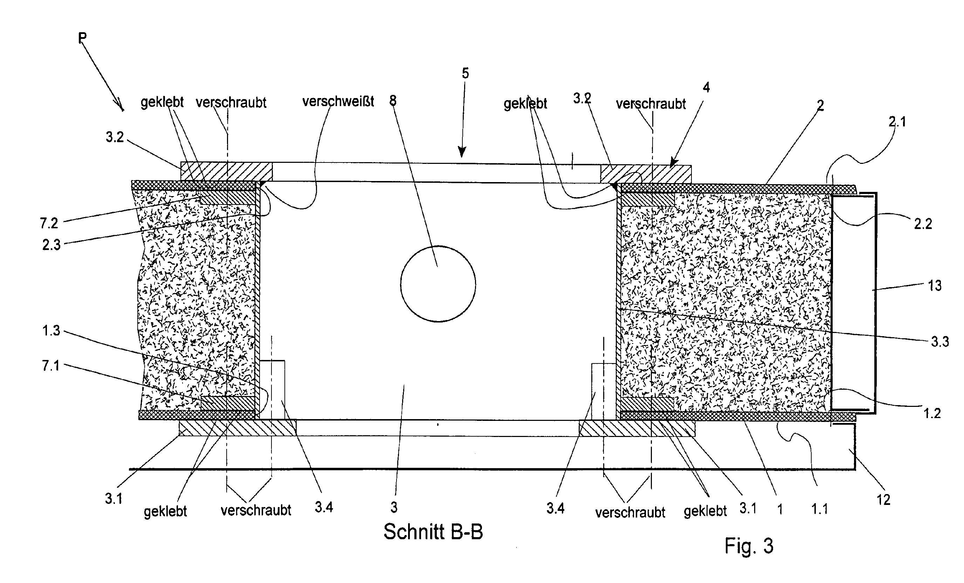

In Figur 1 ist die Draufsicht einer erfindungsgemäßen Leichtbaugrundplatte P dargestellt.
Das untere, hier nicht sichtbare erste plattenförmige Element 1 und das obere zweite plattenförmige Element 2 sind durch Abstandselemente 3 miteinander verbunden, wobei die Abstandselemente 3 mit Adapterelementen 4 gekoppelt sind, die sich über dem zweiten plattenförmigen Element 2 befinden. Die Adapterelemente 4 dienen zur Aufnahme nicht dargestellter Komponenten wie Justierelemente und/oder Fixierelemente und/oder Spannelemente und/oder Handhabungselemente und/oder Sensoren und/oder Messmodule und/oder Bearbeitungsmodule, die bevorzugt zum Fügen und/oder Bearbeiten von Fahrzeugteilen oder anderen Teilen benötigt werden.
Die Abstandselemente und die Adapterelemente sind rasterartig angeordnet und durch beide führt ein Durchbruch 5. In der Mitte der Leichtbaugrundplatte P ist ein Handhabungsmodul 6 vorgesehen.
Der Längsschnitt A-A gem. Fig. 1 ist in Fig. 2 dargestellt. Der Schnitt A-A verläuft hier mittig durch das Handhabungsmodul 6.
Den Längsschnitt B-B durch die Leichtbaugrundplatte P, mittig durch ein Abstandselement 3, zeigt Fig. 3.
Aus Fig. 2 und 3 ist erkennbar, dass das Abstandselement 3 mit einem ersten Flansch 3.1 an der Außenseite 1.1 des ersten plattenförmigen Elementes 1 anliegt. Ein hülsenförmiger (insbesondere zylindrischer oder rechteckförmiger) Bereich 3.3 erstreckt sich bis zum zweiten plattenförmigen Element 2. An den hülsenförmigen Bereich 3.3 schließt sich ein zweiter Flansch 3.2 an, der an der Außenseite 2.1 des zweiten plattenförmigen Elementes 2 anliegt. Der zweite Flansch 3.2 ist hier als Adapterelement 4 ausgebildet. Gemäß einer nicht dargestellten Ausführungsform ist an dem zweiten Flansch 3.2 ein Adapterelement befestigbar.
Der erste Flansch 3.1 ist mit dem hülsenförmigen Bereich 3.3 verbunden. Dies kann z.B. durch eine stoffschlüssige Verbindung wie Schweißen oder Kleben, eine Schraubverbindung oder eine kombinierte Fügeverbindung erfolgen. Im dargestellten Ausführungsbeispiel wurde eine Schraubverbindung gewählt. Dazu weist der hülsenförmige Bereich Gewindebuchsen 3.4 (Fig. 3) auf. Der zweite Flansch 3.2 ist mit dem hülsenförmigen Bereich 3.3 einstückig ausgebildet oder (wie hier in Fig. 3 dargestellt) verschweißt.
Zur Erhöhung der Stabilität der Verbindung liegt an der Innenseite 1.2 des ersten plattenförmigen Elementes 1 eine erste Platte 7.1 und an der Innenseite 2.2 des zweiten plattenförmigen Elementes 2 eine zweite Platte 7.2 an. Der erste Flansch 3.1, das erste plattenförmige Element 1 und die erste Platte 7.1 werden miteinander verschraubt. Gleichfalls wird zwischen zweitem Flansch 3.2, zweitem plattenförmigen Element 2 und zweiter Platte 7.2 eine Schraubverbindung hergestellt. Vorteilhafterweise werden die die Platten 7.1, 7.2 sowie der erste und zweite Flansch 3.1, 3.2 zusätzlich mit dem ersten und zweiten plattenförmigen Element 1, 2 stoffschlüssig verbunden, bevorzugt verklebt.
Es ist auch möglich, gemäß einer nicht dargestellten Ausführungsform zwischen Abstandselement/Flansch und ggf. Platten eine Verbindung durch "Einknüpfen" bzw. eine Steckverbindung vorzusehen.
In die Wandung des hülsenförmigen Bereiches 3.3 sind zwei sich gegenüberliegende Durchbrüche 8 eingebracht, wobei die Wandung des hülsenförmigen Bereichs 3.3 des Abstandselementes 3 bevorzugt im Querschnitt rechteckig ausgebildet ist.

Das erste plattenförmige Element 1 weist jeweils im Bereich eines Abstandselementes 3 einen ersten Durchbruch 1.3 (Fig. 3) auf. Auch im zweiten plattenförmigen Element ist ein Durchbruch 2.3 (Fig. 3) vorgesehen, der ein Eingreifen des hülsenförmigen Bereichs 3.3 des Abstandselementes 3 gewährleistet.
Insgesamt führt somit ein Durchbruch 5 (s. auch Fig. 1) durch beide plattenförmigen Elemente 1, 2, das Abstandselement 3 und das Adapterelement 4 bzw. die Flansche 3.1, 3.2 und die Platten 7.1, 7.2.

Gem. Fig. 2 weist das Handhabungsmodul 6 einen Lagertopf 6.1 auf, der sich zwischen den plattenförmigen Elementen 1, 2 erstreckt und mit diesen verbunden ist. Der Lagertopf 6.1 weist einen kreisförmigen Querschnitt auf, der sich radial in Richtung zum ersten plattenförmigen Element 1 erweitert an dessen Innenseite 1.2 mit einem radial nach außen weisenden Flansch 6.2 anliegt. Weiterhin liegt der Lagertopf 6.1 an der Innenseite 2.2 des zweiten plattenförmigen Elementes 2 mit einem radial nach außen weisenden zweiten Flansch 6.3 an. An der Außenseite 1.1 des ersten plattenförmigen Elementes 1 ist im Bereich des ersten Flansches 6.2 des Lagertopfes 6 eine ringförmige Platte 9 angebracht. An die Außenseite 2.1 des zweiten plattenförmigen Elementes 2 schließt sich im Bereich des zweiten Flansches 6.3 des Lagertopfes 6 eine Adapterplatte 10 an, die durchgängig und napfartig ausgebildet ist.
Innerhalb des Handhabungsmoduls 6 (hier an der Adapterplatte 10) ist eine Kupplung 11 für ein nicht dargestelltes Handhabungselement vorgesehen.
Die Adapterplatte 10 kann ebenfalls eine oder mehrere Adapterelemente tragen oder selbst zur Aufnahme von Komponenten für die Montage bzw. Bearbeitung von Bauteilen dienen. Dies können z.B. Handhabungs- oder Spannmodule oder auch andere Module, Sensoren usw. sein.

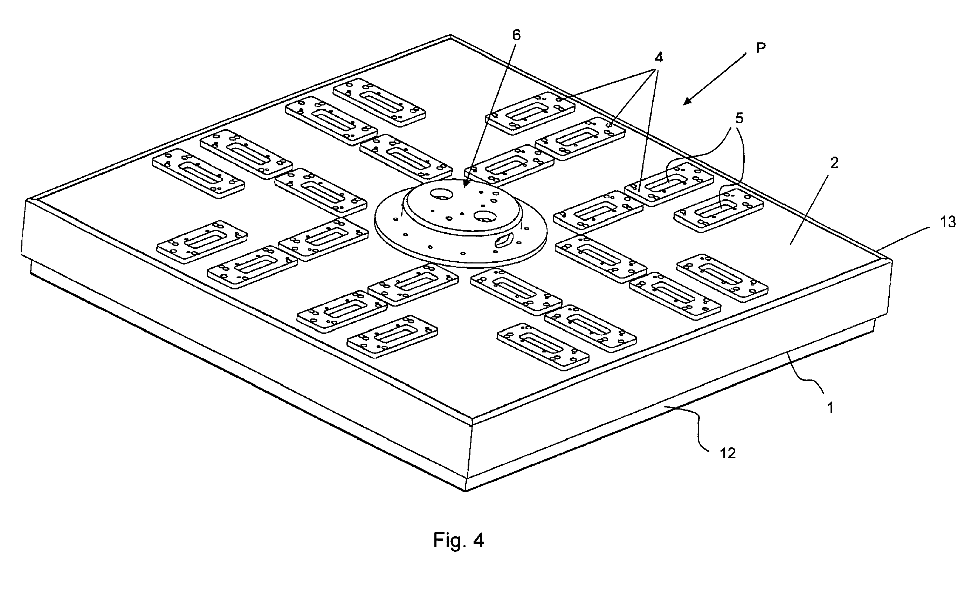

Die dreidimensionale Darstellung einer Leichtbaugrundplatte gem. Fig. 1 bis 3 zeigt Fig. 4.

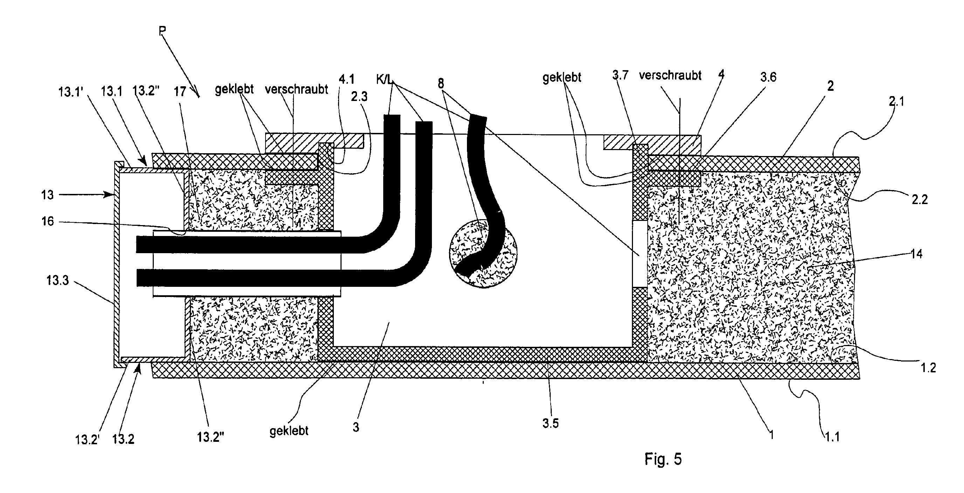

Aus den Darstellungen 1 bis 4 ist erkennbar, dass sich an die Außenseite 1.1 (Unterseite) des ersten plattenförmigen Elementes 1 ein zur Kabel- und/oder Leitungsdurchführung bzw. Leitungslagerung geeigneter Hohlraum 12 anschließt. Weiterhin wird die Leichtbaugrundplatte P von einem zur Kabel- und/oder Leitungsdurchführung geeigneten Kabelkanal 13 umringt.
Über den Hohlraum 12 bzw. die Kabelkanäle 13 in Verbindung mit den Durchbrüchen 5 sowie auch über die Durchbrüche 8 wird eine integrierte Leitungs- bzw. Kabelführung zu den Komponenten der Leichtbaugrundplatte P möglich.
Nach der Montage der Abstands- und Adapterelemente sowie des Handhabungsmoduls und dem Verlegen aller Kabel bzw. Leitungen erfolgt das Ausschäumen der Leichtbaugrundplatte mittels Strukturschaum 14 (s. Fig. 3 und 5), so dass der Raum zwischen dem ersten und zweiten plattenförmigen Element 1, 2, den Abstandselementen 3 und dem Handhabungsmodul 6 vollständig damit ausgefüllt ist.
Dadurch wird gewährleistet, dass keine Feuchtigkeit eindringen kann. Weiterhin wird die Stabilität und die statische Steifigkeit der Leitbaugrundplatte erhöht und Schwingungen gedämpft.

Eine alternative Befestigung eines Abstandselementes und eines Adapterelementes wird in Fig. 5 dargestellt. Fig. 5 zeigt dabei einen Längsschnitt durch ein zwischen ersten und zweiten plattenförmigen Element 1, 2 angeordnetes Abstandselement 3. Das Abstandselement 3 ist napfförmig ausgebildet und liegt mit der Unterseite seines Bodens 3.5 an der Innenseite 1.2 des ersten plattenförmigen Elementes 1 an. In der Wandung des hülsenförmigen Bereiches 3.3 sind vier im gleichen Abstand zueinander angeordnete Durchbrüche 8 angeordnet. Das erste plattenförmige Element 1 ist im Bereich des Abstandselementes 3 geschlossen. Durch Durchbrüche 16, die durch den Kabelkanal 13 in das plattenförmige Element P führen, reichen Rohre 17 bis zu jeweils einem Durchbruch 8 eines Abstandselementes 3. Durch die Rohre 17 und die hohlen (napfförmigen) Abstandshalter 3 können Kabel/Leitungen K/L bis über die Oberseite des zweiten plattenförmigen Elementes 2 gelegt werden.
Das Abstandselement 3 weist einen radial nach außen weisenden Flansch 3.6 auf, der an der Innenseite 2.2 des zweiten plattenförmigen Elementes 2 anliegt. Weiterhin greift ein über den Flansch 3.6 nach oben hinausragender Ringbereich 3.7 zentrierend und lagefixierend in einen Durchbruch 2.3 des zweiten plattenförmigen Elementes 2 ein. Da der Flansch 3.6 innen liegt, kann dieser nicht als Adapterelement dienen. Daher ist ein separates Adapterelement 4 auf der Außenseite 2.1 des zweiten plattenförmigen Elementes 2 angeordnet, welches mit dem zweiten plattenförmigen Element 2 und dem Flansch 3.6 über geeignete, nicht dargestellte Verbindungsmittel verbunden wird. Bevorzugt reicht der Ringbereich 3.7 auch über die Außenseite 2.1 des zweiten plattenförmigen Elementes 2 hinaus, so dass er gleichzeitig zur Fixierung des Adapterelementes 4 dienen kann. Dazu weist das Adapterelement 4 z.B. eine Ringnut 4.1 auf, in welche der Ringbereich 3.7 eingreift.
Das Abstandselement 4 kann beispielsweise mit dem ersten und zweiten plattenförmigen Element 1, 2 stoffschlüssig verbunden, z.B. verklebt und zusätzlich mit dem Flansch 3.6 verschraubt sein.
Auch hier ist der Innenraum der Leichtbaugrundplatte P mit Strukturschaum 14 ausgeschäumt. Dadurch, dass die Kabel/Leitungen K/L durch die Rohre 17 geführt werden, sind diese im Bedarfsfall auswechselbar. An den Randbereich der Leichtbaugrundplatte P schließt sich der Kabelkanal 13 an, der aus zwei Winkelprofilen 13.1, 13.2 und einer Abdeckblende 13.3 gebildet wird. Die Winkelprofile 13.1, 13.2 liegen jeweils mit einem Schenkel 13.1', 13.2' an einem plattenförmigen Element 1, 2 an und die anderen beiden Schenkel 13.1", 13.2" weisen aufeinander zu und sind voneinander beabstandet, so dass zwischen diesen eine Lücke in Form des Durchbruchs 16 verbleibt, durch die Kabel/Leitungen K/L und Rohre verlegt werden können. Der Kabelkanal 13 wird durch einen Deckel 13.3 verschlossen, der an die Schenkel 13.1', 13.2' der beiden Winkelprofile 13.1, 13.2 angrenzt.

Gemäß einer nicht dargestellten Ausführungsform können die beiden Schenkel auch auf Stoß aneinander anliegen oder sich überlappen. Dann sind im Bereich der Kabel- bzw. Rohrdurchführungen entsprechende Durchbrüche vorzusehen.
Durch die Verwendung der beiden Winkelprofile 13.1, 13.2 können Abstandsunterschiede der beiden plattenförmigen Elemente 1, 2 einfach ausgeglichen werden.
Das erste und/oder das zweite plattenförmige Element 1, 2, das/die Abstandselemente 3 und/oder der Lagertopf 6.1 und/oder die Adapterelemente 4 und/oder die erste/n und oder zweite/n Patte/n 7.1, 7.2 können aus Stahl, Aluminium, Kunststoff, faserverstärktem Kunststoff (z.B. glasfaser- oder carbonfaserverstärktem Kunststoff) oder einer Kombination dieser Materialien bestehen.
Die beiden plattenförmigen Elemente 1, 2 und die Kabelkanäle bestehen bevorzugt aus glasfaserverstärktem Kunststoff (GFK), die Abstandselemente, Flansche, Adapterelemente und Platten werden vorzugsweise aus einem metallischen Werkstoff, insbesondere aus Aluminium hergestellt.
Der Werkstoff, mit welchem der Zwischenraum zwischen den Platten ausgeschäumt wird, ist insbesondere Strukturschaum.
Um die aus glasfaserverstärktem Kunststoff bestehenden Teile an ihrer Oberfläche vor starker Hitzeeinwirkung zu schützen, können diese mit einer entsprechenden Beschichtung versehen sein. Z.B. ist es möglich, die insbesondere außen liegenden Oberflächen der plattenförmigen Elemente und ggf. auch der Kabelkanäle mit einer Metallfolie, beispielsweise einer Aluminiumfolie zu kaschieren. Wird die Leichtbaugrundplatte z.B. zum Fügen von Fahrzeug- oder anderen Teilen durch Schweißen eingesetzt, dient die Metallfolie zum Schutz gegen Spritzer, die beim Schweißen entstehen und ansonsten ungeschützte Faserverbundwerkstoffe beschädigen könnten.
Mit der erfindungsgemäßen Lösung wird insgesamt eine einfache, leichte, flexibel bestückbare und kompakte Leichtbaugrundplatte geschaffen.

## Patentansprüche

1. Leichtbaugrundplatte, insbesondere zum Fügen und/oder Bearbeiten von Fahrzeugteilen, unter Verwendung von Adapterelementen zur Befestigung von Komponenten an der Leichtbaugrundplatte, wobei die Leichtbaugrundplatte (P) aus einem ersten plattenförmigen Element (1) und einem zweiten plattenförmigen Element (2) gebildet wird, die durch Abstandselemente (3) miteinander verbunden sind, wobei die Adapterelemente (4) und die Abstandselemente (3) miteinander gekoppelt sind.

2. Leichtbaugrundplatte nach Anspruch 1, **dadurch gekennzeichnet, dass** jeweils ein Abstandselement (3) mit dem ersten plattenförmigen Element (1) und dem zweiten plattenförmigen Element (2) verbunden ist und dass jeweils ein Adapterelement (4) an der Oberseite des zweiten plattenförmigen Elementes (2) angeordnet ist.

3. Leichtbaugrundplatte nach Anspruch 1 oder 2, **dadurch gekennzeichnet, dass** die Abstandselemente (3) massiv, hohl oder napfförmig ausgebildet sind.

4. Leichtbaugrundplatte nach einem der Ansprüche 1 bis 3, **dadurch gekennzeichnet, dass** ein hohles oder napfförmiges Abstandselement (3) in Richtung zu wenigstens einem plattenförmigen Element (1, 2) einen nach außen weisenden Flansch (3.1, 3.2) aufweist, mit dem es am plattenförmigen Element (1, 2) anliegt

5. Leichtbaugrundplatte nach einem der Ansprüche 1 bis 4, **dadurch gekennzeichnet, dass** der Querschnitt des Abstandselementes (3) in der Form eines Vielecks oder kreisförmig ausgebildet ist.

6. Leichtbaugrundplatte nach einem der Ansprüche 1 bis 5, **dadurch gekennzeichnet, dass** das Abstandselement (3) erste Befestigungspositionen in Richtung zum ersten plattenförmigen Element (1) und zweite Befestigungspositionen in Richtung zum zweiten plattenförmigen Element (2) aufweist.

7. Leichtbaugrundplatte nach einem der Ansprüche 1 bis 6, **dadurch gekennzeichnet, dass** die ersten und zweiten Befestigungspositionen zueinander fluchtend angeordnet sind.

8. Leichtbaugrundplatte nach einem der Ansprüche 1 bis 7, **dadurch gekennzeichnet, dass** das erste und/oder zweite plattenförmige Element (1, 2) im Bereich der Befestigungspositionen eines Abstandselementes (3) Ausnehmungen (1.3, 2.3) aufweist/aufweisen.

9. Leichtbaugrundplatte nach einem der Ansprüche 1 bis 8, **dadurch gekennzeichnet, dass** das Abstandselement (3) am ersten plattenförmigen Element (1) mittels eines ersten Befestigungsflansches (3.1), der am ersten plattenförmigen Element (1) anliegt, befestigt ist oder dass ein napfförmiges Abstandselement (3) mit dem Boden (3.5) des Napfes am ersten plattenförmigen Element (1) befestigt ist.

10. Leichtbaugrundplatte nach einem der Ansprüche 1 bis 9, **dadurch gekennzeichnet, dass** das Abstandselement (3) am zweiten plattenförmigen Element (2) mittels eines zweiten Befestigungsflansches (3.2), der am zweiten plattenförmigen Element (2) anliegt, befestigt ist.

11. Leichtbaugrundplatte nach einem der Ansprüche 1 bis 10, **dadurch gekennzeichnet, dass** der erste und/oder der zweite Befestigungsflansch (3.1, 3.2) außen oder innen am ersten/zweiten plattenförmigen Element (1, 2) anliegt/anliegen.

12. Leichtbaugrundplatte nach einem der Ansprüche 1 bis 11, **dadurch gekennzeichnet, dass** auf der dem ersten Befestigungsflansch (3.1) gegenüberliegenden Seite des ersten plattenförmigen Elementes (1) eine erste Platte (7.1) angeordnet ist, mit welcher der erste Befestigungsflansch (3.1) verbunden ist, so dass das erste plattenförmige Element (1) zwischen erstem Befestigungsflansch (3.1) und erster Platte (7.1) sitzt.

13. Leichtbaugrundplatte nach einem der Ansprüche 1 bis 12, **dadurch gekennzeichnet, dass** auf der dem zweiten Befestigungsflansch (3.2) gegenüberliegenden Seite des zweiten plattenförmigen Elementes (2) eine zweite Platte (7.2) angeordnet ist, mit welcher der zweite Befestigungsflansch (3.2) verbunden ist, so dass das zweite plattenförmige Element (2) zwischen zweitem Befestigungsflansch (3.2) und zweiter Platte (7.2) sitzt.

14. Leichtbaugrundplatte nach einem der Ansprüche 1 bis 13, **dadurch gekennzeichnet, dass** der am zweiten plattenförmigen Element (2) außen anliegende zweite Befestigungsflansch (3.2) oder die am zweiten plattenförmigen Element außen anliegende Platte (7.2) als Adapterelement (4) ausgebildet ist/sind oder ein Adapterelement (4) tragen.

15. Leichtbaugrundplatte nach einem der Ansprüche 1 bis 14, **dadurch gekennzeichnet, dass** mehrere miteinander gekoppelte Einheiten aus Adapterelement (4) und Abstandselement (3) rasterartig angeordnet sind.
